# EUROPEAN PATENT APPLICATION

(11) **EP 1 443 705 A1**
(43) Date of publication of application: **04.08.2004**
(21) Application number: 02778024.6
(22) Date of filing: 31.10.2002
(51) Int. Cl.: H04L 12/28

(54) **SERVER APPARATUS AND TERMINAL APPARATUS USED IN VIDEO TRANSMISSION SYSTEM**

(30) Priority: 05.11.2001 JP 2001339475
(71) Applicant: Matsushita Electric Industrial Co., Ltd., Kadoma-shi, Osaka 571-0050 (JP)
(72) Inventor: INOUE, Akino, Meguro-ku, Tokyo 153-0051 (JP); TAKESHITA, Sachiko, Suginami-ku, Tokyo 166-0016 (JP); SATOU, Masaki, Urayasu-shi, Chiba 279-0001 (JP); OKA, Toshio, Yokohama-shi, Kanagawa 245-0051 (JP); KOMIYA, Daisaku, Yokohama-shi, Kanagawa 230-0024 (JP); SENGA, Satoshi, Tokorozawa-shi, Saitama 359-1151 (JP)
(74) Representative: Grünecker, Kinkeldey, Stockmair & Schwanhäusser Anwaltssozietät
(86) International application number: PCT/JP2002/011397
(87) International publication number: WO 2003/041341

(57) **Abstract**

Provided is a server apparatus and terminal unit for realizing a video transmission system that, even in case the video image is suspended by a handover, reproduction can be resumed at a video image of upon suspension. In a video transmission system having a video server for sending video data to a terminal unit through an access point and a terminal unit for receiving and displaying the video data sent from the access point and for establishing an association and releasing of a wireless channel to the access point, the terminal unit releases the access point and wireless channel and requests the video server to suspend the transmission and store video data. In case an association is established with a new access point, the terminal unit requests the video server to re-send the video data, etc. stored in the duration of from the release to an association establishment.

## Description

### <TECHNICAL FIELD>

The present invention relates to a server apparatus and terminal unit for utilization in a video transmission system on a wireless network, and more particularly to a server apparatus and terminal unit for utilization in realizing a video transmission system that, even in the event that the video image is suspended by a handover, resumption is possible at the video image of at the time of suspension.

### <BACKGROUND ART>

The video data, to be sent in a video transmission system, is usually compression-encoded under the H.261 scheme, the MPEG scheme or the like. These compression encode schemes selectively use, by change over, an intra-frame encoded image that the pixel value is encoded as it is, and a inter-frame predictive encoded image that the difference from a reference frame is encoded. The image less in movement or change, because of extreme similarity between the current frame and the preceding frame, uses a inter-frame predictive encoded image that encoding is on the difference of from the preceding frame. On the other hand, the video image greater in movement or change or the video image of upon a scene change is smaller in the correlation between the frames, hence using an intra-frame encoded image that encoding is directly on the pixel value. Accordingly, in a video transmission system to transmit a video image less in scene change and not much in subject movement as in television conference, the intra-frame encoded image is first transmitted, and from then on, the inter-frame predictive encoded image is sent out.

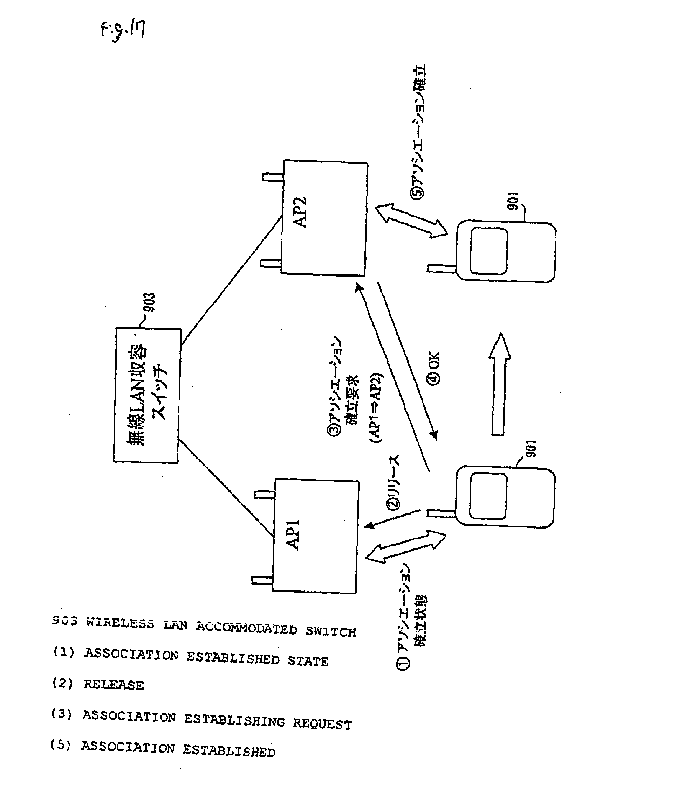

In the below, explanation is made on the case using a terminal unit capable of sending and receiving video data through an access point, in the conventional video transmission system using a wireless network. Fig. 17 is an arrangement diagram showing the conventional video transmission system.

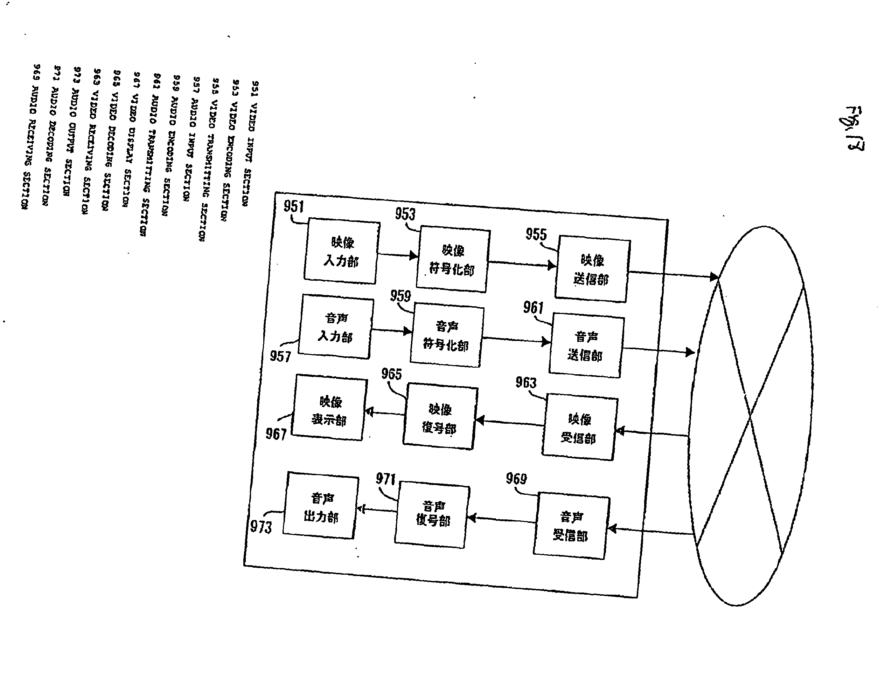

As shown in Fig. 17, the terminal unit 901 capable of sending and receiving video data is a terminal capable of sending and receiving video data through an access point AP1 or AP2. The access point AP, where the relevant terminal unit 901 is to utilize, is switched over by the wireless LAN accommodated switch 903. Fig. 18 shows an internal configuration of the terminal unit 901 used in the conventional video transmission system. As shown in the figure, the terminal unit 901 is configured having a video input section 951, a video encoding section 953, a video transmitting section 955, an audio input section 957, an audio encoding section 956, an audio transmitting section 961, a video receiving section 963, a video decoding section 965, a video display section 967, an audio receiving section 969, an audio decoding section 971 and an audio output section 973.

Next, explanation is made on the operation that the access point establishing an association is shifted from AP1 to AP2 by a movement of the above-explained terminal unit 901. At first, (1) in the state that an association is established of the terminal unit 901 with the AP1, (2) terminal unit 901 releases the wireless channel on which an association is established. Because an ID of the AP2 has been sent from the AP2 to the terminal unit 901 established an association with the AP1, the terminal unit 901 releases the wireless channel with the AP1 and then (3) requests the AP2 to establish an association of wireless channel. (4) When the AP2 sends a response of establishment OK back to the terminal unit 901 in response to this request, (5) the terminal unit 901 establishes an association of wireless channel with the AP2.

### <DISCLOSURE OF THE INVENTION>

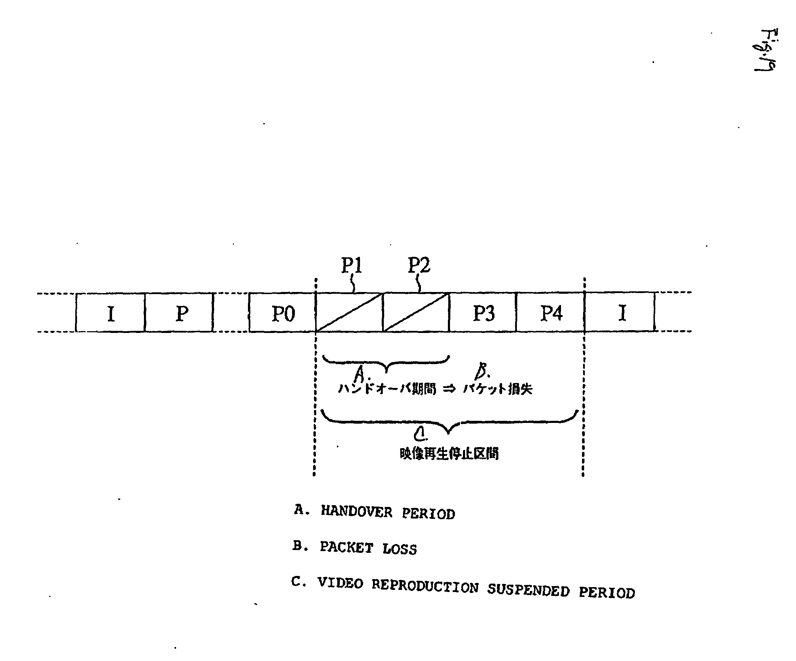

However, when the access point is changed over (handover) in the conventional video transmission system, the terminal unit 901 is not supplied with the video data for the duration of from the "(2) release" up to "(5) establishing an association with a new access point", i.e. resulting in an occurrence of packet loss. Moreover, as shown in Fig. 19 for example, in case the video data of upon establishing an association with a new access point is of a inter-frame forward predictive encoded image (P picture), the P picture (P3 - P4) is data having a nature that encoding is on the difference of from the preceding frame. Accordingly, the terminal unit 901 next reproduces a video image after the handover is terminated and an intra-frame encoded image (I picture) is received for the first time.

Accordingly, in the conventional video transmission system, no reproduction is available on the image for the duration of the duration of from a handover start to a handover end, at before first receiving an I picture (video-reproduction suspended section), in the terminal unit 901. For this reason, there is a desire for a video transmission system that, even in case video image is suspended due to a handover, resumption is possible at the image of at the time of suspension. Incidentally, the "video image" in the above explanation does not include a visually broken image but refers to only a normal image.

The present invention has been made in view of the above conventional circumstance, and it is an object to provide a server apparatus and terminal unit to be utilized in a video transmission system that, even in case the video image is suspended by a handover, resumption is available at the video image of upon suspension.

In order to achieve the above object, a server apparatus according to the present invention is a server apparatus for sending video data on a packet-by-packet basis, in a video transmission system for sending video data to a terminal unit through an access point, the server apparatus comprising: a transmitting section for sending video data on a packet-by-packet basis; a video data storing section for storing video data; and a receiving section for receiving a request from the terminal unit; wherein the video storing section, when the terminal unit received video data sent from an access point established an association and displayed a video image releases a wireless channel to an access point on which an association is established, stores post-release video data; the receiving section, when the terminal unit establishes an association of wireless channel to another access point, receiving a request to retransmission the stored post-release video data from the terminal unit.

Meanwhile, the server apparatus of the invention further comprises a transmission control section for control to send video data, the receiving section receiving a transmission-suspension request from a transmission-suspension requesting section the terminal unit possesses and a retransmission request from a retransmission requesting section, the transmission control section controlling to send video data or stored video data, on the basis of the transmission suspension request and the retransmission request.

Meanwhile, the server apparatus of the invention further comprises a video data re-encoding section for re-encoding video data, the receiving section receiving a retransmission request from a retransmission requesting section the terminal unit possesses, the video data re-encoding section re-encoding the stored video data such that, of stored vided data to send according to the retransmission request, one or more frames becomes an intra-frame encoded image.

Meanwhile, the transmitting section of the server apparatus of the invention sends video data by multicast to an access point for sending video data to the terminal unit established an association and a plurality of access points adjacent to the access point.

Next, a terminal unit according to the present invention is a terminal unit for receiving video data sent from an access point established an association and displaying a video image, in a video transmission system for sending video data to the terminal unit through the access point, the terminal unit comprising: a video receiving section for receiving video data sent on a packet-by-packet basis; a video display section for displaying a video image on a basis of the video data; a transmission-suspension requesting section for sending a transmission-suspension request for suspending to send and storing video data, to a server apparatus for sending video data on a packet-by-packet basis; and a retransmission requesting section for sending a request to resend video data, to the server apparatus; wherein the transmission-suspension requesting section, when a wireless channel to an access point established an association is released, forwards a transmission-suspension request of the post-release video data to the server apparatus; the retransmission requesting section, when an association of wireless channel to another access point is established, forwarding a request to resend the stored post-release video data to the server apparatus.

A terminal unit of the invention further comprises a video data receiving status monitoring section for monitoring a receiving status of video data to send from the access point, an association establishment detecting section for detecting an association establishment of a wireless channel to another access point by the terminal unit, on the basis of a receiving status of video data being monitored by the video data receiving status monitoring section, and a retransmission-request transmitting section for sending a request to resend the post-release video data stored in the server apparatus when the association establishment detecting section detects an association establishment of a wireless channel to the other access point.

Meanwhile, a terminal unit of the invention further comprises a transmission-suspension requesting section for requesting the server apparatus to suspend video data from sending, immediately before releasing the wireless channel to the access point established an association, and a retransmission requesting section for requesting the server apparatus to resend video data when an association of wireless channel is established to an access point.

Meanwhile, the retransmission requesting section of the terminal unit of the invention releases the wireless channel to the access point established an association, notifies, after established an association of wireless channel to adjacent another access point, the other access point of to what point received video data from the access point, and forwards a request to send a continuation of video data from the other access point.

Meanwhile, the terminal unit of the invention further comprises a multi-link network managing section for managing to switch over two wireless channels for one IP connection, the multi-link network managing section managing to switch over the wireless channels in the terminal unit such that, in a state the terminal unit is established with an association with an access point, an association of wireless channel is established to another access point and the wireless channel is released from the access point.

### <BRIEF DESCRIPTION OF THE DRAWINGS>

Fig. 1 is an explanatory figure showing the arrangement and operation of a video transmission system according to a first embodiment of the invention.
Fig. 2 is a block diagram showing an internal configuration of a terminal unit used in the video transmission system of the first embodiment.
Fig. 3 is an explanatory figure explaining the packet and the operation of the video transmission system when a handover is made in the first embodiment.
Fig. 4 is an explanatory figure showing the arrangement and operation of a video transmission system according to a second embodiment of the invention.
Fig. 5 is an explanatory figure showing the arrangement and operation of a video transmission system according to a third embodiment of the invention.
Fig. 6 is an explanatory figure showing the arrangement and operation of a video transmission system according to a fourth embodiment of the invention.
Fig. 7 is a block diagram showing an internal configuration of a personal digital assistant and video server used in the video transmission system of the fourth embodiment.

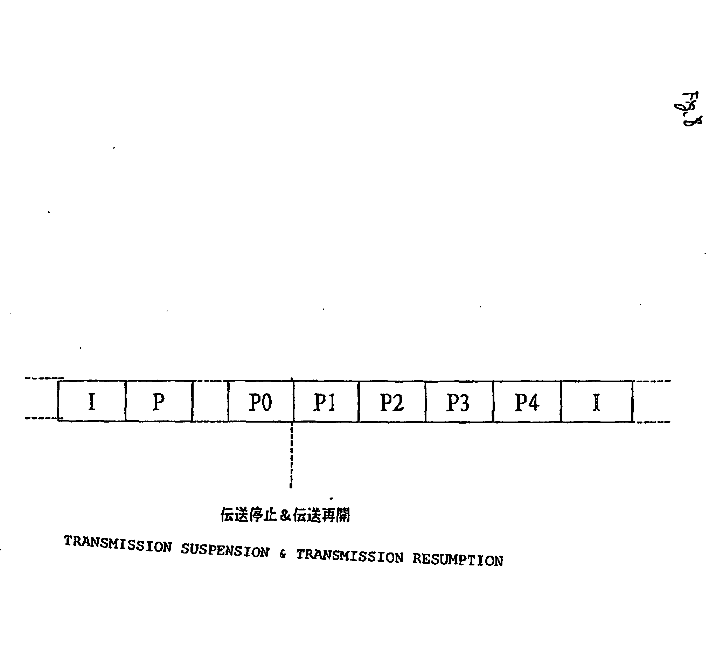

Fig. 8 is an explanatory figure explaining the packet and the operation of the video transmission system when a handover is made in the fourth embodiment.
Fig. 9 is a block diagram showing an internal configuration of a personal digital assistant and video server used in the video transmission system of the fifth embodiment.
Fig. 10 is an explanatory figure explaining the packet and the operation of the video transmission system when a handover is made in the fifth embodiment.
Fig. 11 is a block diagram showing an internal configuration of a personal digital assistant, access point and video server used in the video transmission system of the sixth embodiment.
Fig. 12 is an explanatory figure explaining the packet and the operation of the video transmission system when a handover is made in the sixth embodiment.
Fig. 13 is an explanatory figure showing the arrangement and operation of a video transmission system according to a seventh embodiment of the invention.
Fig. 14 is a block diagram showing an internal configuration of a personal digital assistant, access point and wireless LAN accommodated switch used in the video transmission system of the seventh embodiment.
Fig. 15 is an explanatory figure explaining the packet and the operation of the video transmission system when a handover is made in the eighth embodiment.
Fig. 16 is a block diagram showing an internal configuration of a personal digital assistant, access point and wireless LAN accommodated switch used in the video transmission system of the eighth embodiment.
Fig. 17 is a configuration diagram showing a video transmission system in the prior art.
Fig. 18 is a block diagram showing an internal configuration of a terminal unit used in the video transmission system in the prior art.
Fig. 19 is an explanatory figure showing a video reproduction suspended period of upon an occurrence of packet loss due to a handover.

Meanwhile, the reference number 101, 203 represents a video server; 103, 303, 403 a wireless LAN accommodated switch; AP, AP1, AP2 an access point; 105, 111, 201, 301, 401 a terminal unit; 107 is a data storing section; 109 is a cache buffer for handover; 151, 251, 451 a video receiving section; 153 a video buffer; 155, 253, 353, 453 a video decoding section; 157, 255, 355, 455 a video display section; 159, 257, 457 a voice receiving section; 161 a voice buffer; 163, 259, 359, 459 a voice decoding section; 165, 261, 361, 461 a voice output section; 167 a media buffer managing section; 169 a packet-receiving-state monitoring section; 171 a handover start/end detecting section; 173 a retransmission-request transmitting section; 263 a wireless channel releasing section; 265 a transmission-suspension requesting section; 267 a wires channel association establishing section; 269 a retransmission requesting section; 271 a video data storing section; 273 a video data reading section; 275 a video data forwarding section; 277 a voice data storing section; 279 is a voice data reading section; 281 a voice data forwarding section; 283 a transmission-suspension request receiving section; 285 a retransmission request receiving section; 287 a transmission control section; 289 a video data re-encoding section; 291 a handover state managing section; 351 a multicast video receiving section; 357 a multicast voice receiving section; 371 a video-decode-position notifying section; 373 a handover control section; 375 a handover managing section; 463 a channel management table; 465 a multi-link network managing section; 467 a data transfer control section, respectively.

### <BEST MODE FOR CARRYING OUT THE INVENTION>

The server apparatus and terminal unit of the present invention is for utilization in a video transmission system for sending video data to the terminal unit through the utilization of a wireless network, wherein video data is to be sent, packet by packet, through access points.
Incidentally, "I picture" to appear in the below explanation means an intra-frame coded image to be generated upon compression encoding while "P-picture" represents a inter-frame forward predictive coded image.

Hereunder, explanation is made in detail on a video transmission system to which is applied an embodiment of a server apparatus and terminal unit according to the present invention and the relevant apparatus is applied, with reference to the drawings in the order of [first embodiment], [second embodiment], [third embodiment], [fourth embodiment], [fifth embodiment], [sixth embodiment], [seventh embodiment] and [eighth embodiment].

### [First Embodiment]

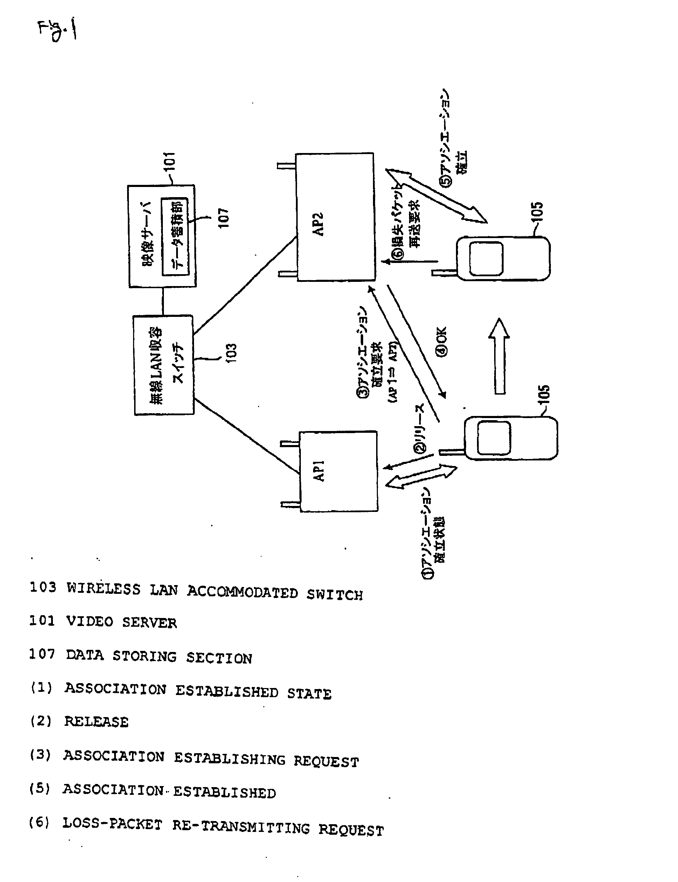

Fig. 1 is an explanatory figure showing the arrangement and operation of a video transmission system having constituent elements of a sever apparatus and terminal unit, according to a first embodiment of the present invention. In the figure, the video transmission system of the first embodiment is arranged with a video server 101 falling on the server apparatus in the claim, a wireless LAN accommodated switch 103, access points AP1, AP2, and a terminal unit 105. Incidentally, in the ensuing explanation, the access points AP1, AP2 collectively are to be referred to as an access point AP.

Hereunder, explained are the constituent elements the video transmission system of this embodiment possesses.

At first, the video server 101 has a data storage section 107 for storing video data, etc., to send video data to the terminal unit 105 through the access point AP. Meanwhile, the wireless LAN accommodated switch 103 is to switch over the connection relationship between the terminal unit 105 and the access point. Meanwhile, the access point AP is to send the video data sent from the video server 101 onto a terminal unit in a connection relationship. Meanwhile, the terminal unit 105 is to receive the video data sent from the access point and display a video image, which also is to establish an association of and release a wireless channel to/from the access point AP.

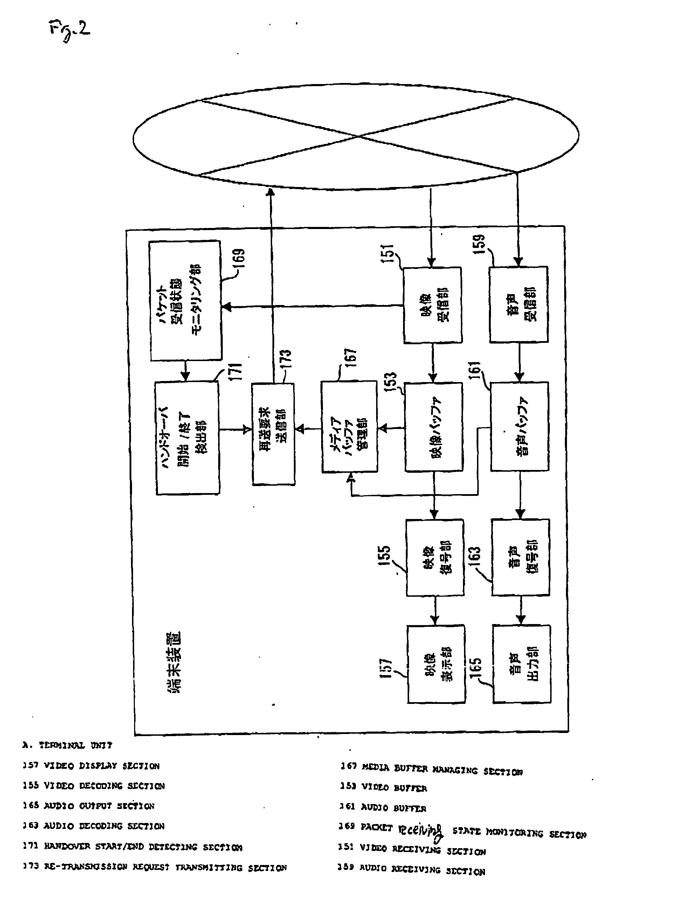

Fig. 2 shows an internal configuration of the terminal unit 105 used in the video transmission system of the first embodiment. As shown in the figure, the terminal unit 105 is configured having a video receiving section 151, a video buffer 153, a video decoding section 155, a video display section 157, an audio receiving section 159, an audio buffer 161, an audio decoding section 163, an audio output section 165, a media buffer managing section 167, a packet-receiving-state monitoring section 169 corresponding to a video-data-receiving-state monitoring section in the claim, a handover start/end detecting section 171 corresponding to an association-establishment detecting section and retransmission-request transmitting section 173. The video data sent from the access point AP is received at the video receiving section 151 and then stored in the video buffer 153. The video data stored in the video buffer 153 is decoded in the video decoding section 155 and displayed on the video display section 157. Similarly, audio data also is received at the audio receiving section 159 and the stored in the audio buffer 161. The audio data stored in the audio buffer 161 is decoded in the audio decoding section 163, to be outputted from the audio output section 165.

The media buffer managing section 167 manages the status of the video buffer 153 or audio buffer 161. Meanwhile, the packet-receiving-state monitoring section 169 monitors, packet by packet, the video data received at the video data receiving section 151, to monitor whether or not there is video data sent onto the terminal unit 105. Meanwhile, the handover start/end detecting section 171 detects a start or end of handover (access point switching over by the terminal unit 105) by the terminal unit 105, on the basis of a packet receiving status being monitored by the packet-receiving -state monitoring section 169.

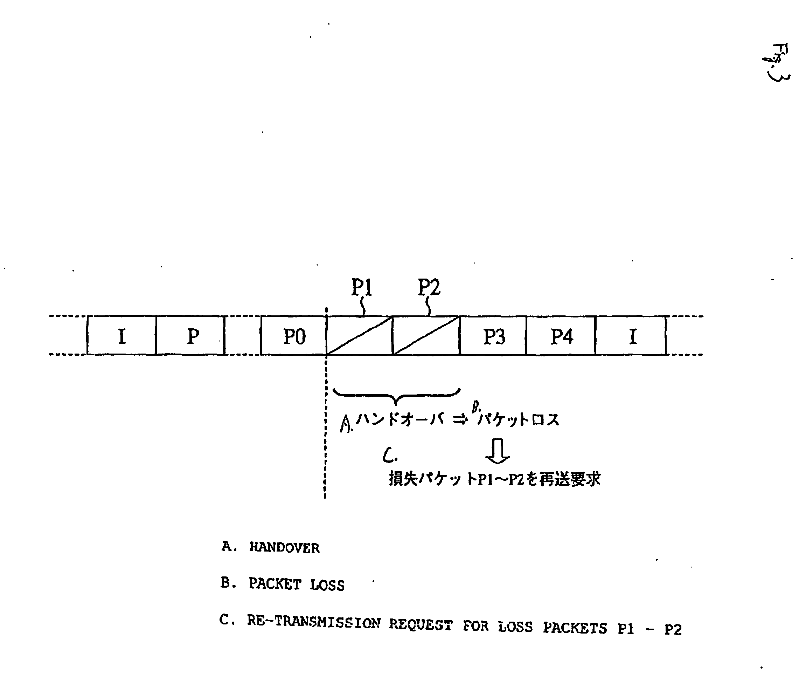

Meanwhile, the retransmission-request transmitting section 173, when the handover start/end detecting section 171 detects an end of handover, requests the access point established an association to resend the video data of during handover. For example, as shown in Fig. 3, even when packet loss is during pictures P1 - P2 by a handover, the terminal unit 105 at its retransmission-request transmitting section 173 makes a retransmission request for video data (P1, P2).

Next, in the video transmission system having the above explained constituent elements, explanation is made on the operation that the access point establishing an association moves from AP1 to AP2 due to a movement of the terminal unit 105, as a video-suspension restoring method in a first embodiment, with reference to Fig. 1.

At first, (1) in a state the terminal unit 105 is established an association with the access point AP1, (2) the terminal unit 105 releases the wireless channel on which an association is established. Because the terminal unit 105 established an association with the AP1 has been sent with an ID of the AP2 from the access point AP2, the terminal unit 105 releases the association with the AP1 and then (3) requests the AP2 to establish association of wireless channel. (4) When the AP2 sends a response of establishment (5) OK- back to the terminal unit 105 in response to the request, the terminal unit 105 establishes an association of wireless channel with the AP2.

After establishing an association of wireless channel with the AP2, the terminal unit 105 detects an end of handover. Hence, (6) the terminal unit 105 requests the AP2 to resend the video data of during handover. The retransmission request is sent from the AP2 to the video server 101, and the video server 101 sends the video data to the terminal unit 105 through the AP2. The terminal unit 105 decodes the video data by adjusting the chronological relationship between the packet of the video data resent from the video server 101 and the packet of real-time video data, thus resuming the reproduction of video image.

As explained above, in the video transmission system and video-suspension restoring method of this embodiment, even when a packet loss takes place due to a handover of the terminal unit 105, the video data of during handover is to be resent onto the terminal unit 105. Accordingly, the terminal unit 105 even if suspended in video image due to a handover, can resume the reproduction at a video image of upon suspension.

### [Second Embodiment]

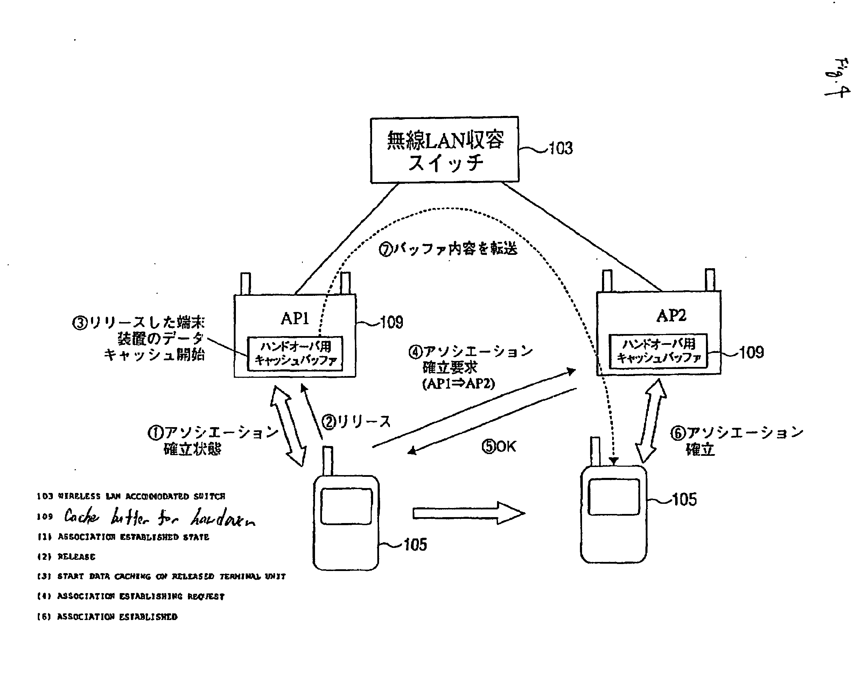

Fig. 4 is an explanatory figure showing the arrangement and operation of a video transmission system having the constituent elements of a sever apparatus and a terminal unit, according to a second embodiment of the present invention. As shown the figure, because the arrangement of the video transmission system of the second embodiment is generally similar to that of the first embodiment, the parts duplicated by Fig. 1 (first embodiment) are attached with the same references thereby omitting of explanation.

However, in this embodiment, the access point AP1, AP2 is provided with a cache buffer for handover 109 corresponding to a video data storage section in the claim. This cache buffer for handover(hereinafter, merely referred to as "buffer") 109 is to buffer the newest video data in an amount of a predetermined time sent onto the terminal unit 105. Meanwhile, the terminal unit 105 is not provided with a packet-receiving-state monitoring section 169, handover start/end detecting section 171 and retransmission request transmitting section 173 the terminal unit 105 of the first embodiment possesses.

Next, in the video transmission system of the present embodiment, explained is the operation that the access point establishing an association moves from AP1 to AP2 due to a movement of the terminal unit 105, as a video-suspension restoring method in a second embodiment, with reference to Fig. 4.

At first, (1) in a state that the terminal unit 105 is established an association with the AP1, (2) the terminal unit 105 releases the wireless channel on which an association is established. In case the wireless channel is released, (3) the AP1 starts to buffer the video data having being sent to the terminal unit 105. Because the terminal unit 105 established an association with the AP1 has been sent with an ID of the AP2 from the access point AP2, the terminal unit 105 releases the association with the AP1 and then (4) requests the AP2 to establish an association of wireless channel. (5) When the AP2 sends a response of establishment OK back to the terminal unit 105 in response to the request, (6) the terminal unit 105 establishes an association of wireless channel with the AP2.

After establishing an association of wireless channel with the AP2, (7) the video data buffered in the buffer 109 of the AP1 is transferred to the AP2, the AP2 sends the relevant video data to the terminal unit 105. The terminal unit 105 decodes the video data by adjusting the chronological relationship between the packet of the video data transferred from the AP1 and the packet of real-time video data, thus reproducing the video image.

As explained above, in the video transmission system and video-suspension restoring method of this embodiment, even when a packet loss takes place due to a handover of the terminal unit 105, the buffer 109 of the access point AP released the wireless channel is buffered with the video data in a duration of from "(2) the release" to "(6) establishing an association with a new access point". After establishing an association, the relevant video data is transferred from the AP1 to the terminal unit 105 through the AP2. Accordingly, the terminal unit 105, even if suspended in video image due to a handover, can resume the reproduction at a video image of upon suspension.

### [Third Embodiment]

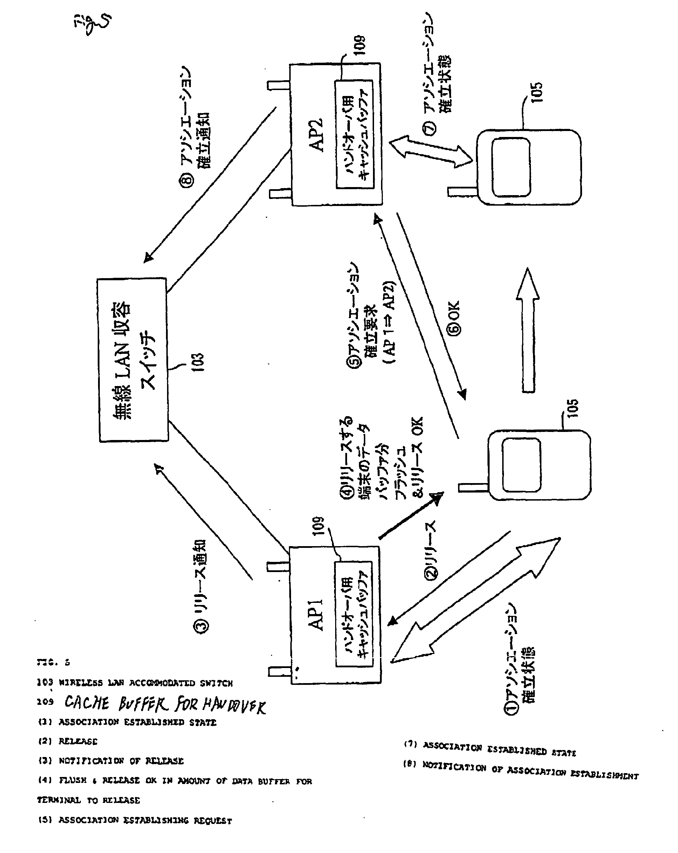

Fig. 5 is an explanatory figure showing the arrangement and operation of a video transmission system having the constituent elements of a sever apparatus and a terminal unit, according to a third embodiment of the present invention. As shown the figure, because the arrangement of the video transmission system of the third embodiment is generally similar to that of the second embodiment, the parts duplicated by Fig. 4 (second embodiment) are attached with the same references thereby omitting of explanation.

In the video transmission system of the present embodiment, explanation is made below on the operation that the access point establishing an association moves from AP1 to AP2 due to a movement of the terminal unit 105, as a video-suspension restoring method in a third embodiment, with reference to Fig. 5.

At first, (1) in a state that the terminal unit 105 is established an association with the AP1, (2) the terminal unit 105 releases the wireless channel on which an association is established. In case the wireless channel is released, (3) the AP1 notifies the wireless LAN accommodated switch 103 of the fact of release. Then, (4) the AP1 flushes the image data buffered immediately before the release, toward the terminal unit 105. Because the terminal unit 105 established an association with the AP1 has been sent with an ID of the AP2 from the AP2, the terminal unit 105 releases the association with the AP1 and then (5) requests the AP2 to establish an association of wireless channel. (6) When the AP2 sends a response of establishment OK back to the terminal unit 105 in response to the request, (7) the terminal unit 105 establishes an association of wireless channel with the AP2.

After the terminal unit 105 establishes an association of wireless channel with the AP2, (7) the AP2 notifies the wireless LAN accommodated switch 103 of a fact that association has been established with the terminal unit 105. Receiving this notification, the wireless LAN accommodated switch 103 instructs the AP1 to suspend the sending of image data to the terminal unit 105. The terminal unit 105 decodes the video data by adjusting the chronological relationship between the packet of the video data sent from the AP1 and the packet of real-time video data, thus reproducing the video image.

As explained above, in the video transmission system and video-suspension restoring method of this embodiment, even when a packet loss takes place due to a handover of the terminal unit 105, the terminal unit 105 is sent with the video data in a duration of from "(2) the release" to an "(7) establishing an association with a new access point" is sent from the released access point. Accordingly, the terminal unit 105, even if suspended in video image due to a handover, can resume the reproduction at a video image of upon suspension.

### [Fourth Embodiment]

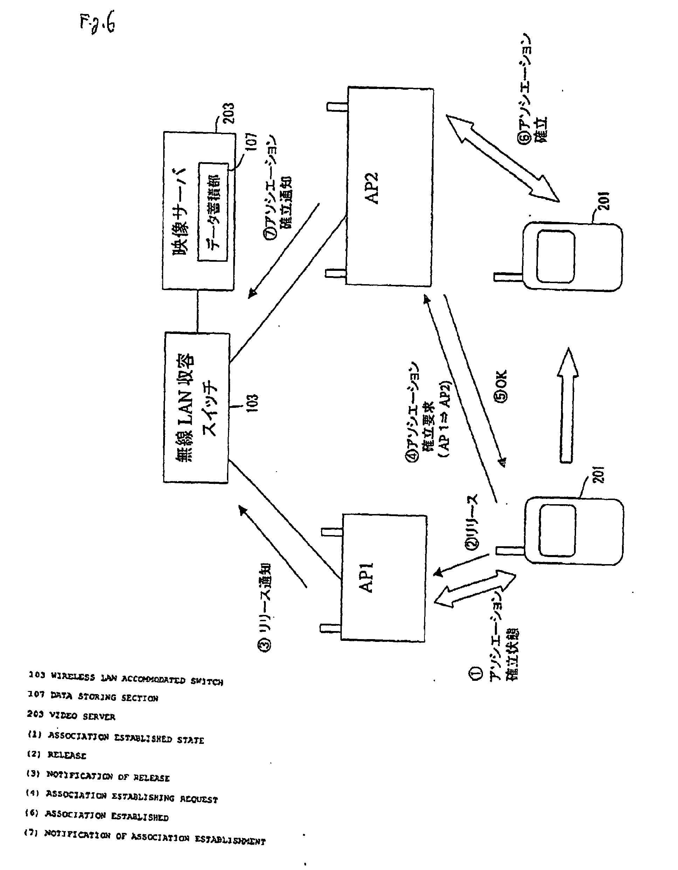

Fig. 6 is an explanatory figure showing the arrangement and operation of a video transmission system having the constituent elements of a sever apparatus and a terminal unit, according to a fourth embodiment of the present invention. As shown the figure, because the arrangement of the video transmission system of the fourth embodiment is generally similar to that of the first embodiment, the parts duplicated by Fig. 1 (first embodiment) are attached with the same references thereby omitting of explanation.

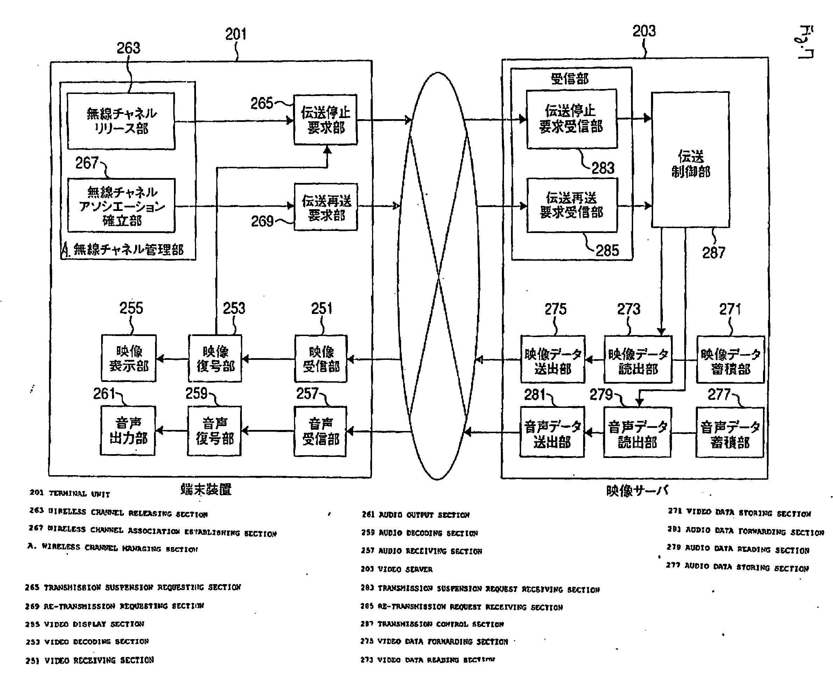

However, the terminal unit 201 and video server 203 used in this embodiment is different from that of the first embodiment. Fig. 7 shows an internal configuration of the terminal unit 201 and video server 203 used in the video transmission system of the fourth embodiment. At first, the terminal unit 111 is configured having a wireless channel releasing section 263, a transmission-suspension requesting section 265, a wireless-channel association establishing section 267 and a retransmission requesting section 269, besides a video receiving section 251, a video decoding section 253, a video display section 255, an audio receiving section 257, an audio decoding section 259 and an audio output section 261. Incidentally, the wireless channel releasing section 263 and the wireless channel association establishing section 267 collectively are referred as a "wireless channel managing section".

The wireless-channel releasing section 263 is to release the wireless channel on which an association is established. Meanwhile, the transmission-suspension requesting section 265, when instructed to release the wireless channel by the wireless-channel releasing section 263, requests the video server 203 to suspend the sending of video data and audio data (hereinafter, referred to as "video data, etc."). Meanwhile, the wireless-channel association establishing section 267 is to establish an association of wireless channel to a new access point. Meanwhile, the retransmission requesting section 269, when instructed to establish an association of WIRELESS CHANNEL by the wireless-channel association establishing section 267, requests the video server 203 to resume the sending of video data, etc.

Meanwhile, the video server 203 is configured having a video data storing section 271, a video data reading section 273, a video data forwarding section 275, an audio data storing section 277, an audio data reading section 279, an audio data forwarding section 281, a transmission-suspension-request receiving section 283, a retransmission-request receiving section 285 and a transmission control section 287. The video data storing section 271 and the audio data storing section 277 configure the data storing section 107 shown in Fig. 6, the respective of which store video data and audio data. Meanwhile, the video data reading section 273 and the audio data reading section 279 are read video data and audio data respectively out of the video data storing section 271 and the audio data storing section 277.

Meanwhile, the transmission-suspension-request receiving section 283 is to receive a transmission-suspension request sent from the terminal unit 201 while the retransmission-request receiving section 285 is to receive a transmission-resuming request from the terminal unit 201. Meanwhile, the transmission control section 287 is to control the read operation of the video data reading section 273 and audio data read section 279, on the basis of a transmission-suspension request received by the transmission-suspension-request receiving section 283 or a transmission-resuming request received by the retransmission-request receiving section 285. Namely, when received a transmission-suspension request, it controls the reading sections not to read out video data and the like. When received a transmission-resuming request, it controls the reading sections to read out video data and the like.

Next, in the video transmission system having the constituent elements explained above, explanation is made on the operation that the access point establishing association moves from AP1 to AP2 due to a movement of the terminal unit 201, as a video-suspension restoring method in a fourth embodiment, with reference to Fig. 6.

At first, (1) in a state that the terminal unit 201 is established an association with the access point AP1, (2) the terminal unit 201 sends to the video server 203 a signal (transmission-suspension request) requesting to suspend the transmission of video data, etc. and store video data, etc. prior to releasing the wireless channel on which an association is established. When the WIRELESS CHANNEL is released, (3) the AP1 notifies the wireless LAN accommodated switch 103 of a fact of release. Because the terminal unit 201 established an association with the AP1 has been sent with an ID of the AP2 from the access point AP2, the terminal unit 201 releases the association with the AP1 and then (4) requests the AP2 to establish an association of wireless channel. (5) When the AP2 sends a response of establishment OK back to the terminal unit 201 in response to the request, (6) the terminal unit 201 establishes an association of wireless channel with the AP2.

After establishing an association of wireless channel with the AP2, (7) the AP2 notifies the wireless LAN accommodated switch 103 of a fact of established an association. At this time, the terminal unit 201 resumes the sending of video data, etc. and sends to the video server 203 a signal requesting to send stored video data, etc. (transmission-resuming request). The terminal unit 201 decodes the video data by adjusting the chronological relationship between the packet of the video data sent from the video server 101 and the packet of real-time video data, thus resuming the reproduction of video image.

As explained above, in the video transmission system and video-suspension restoring method of this embodiment, even when a packet loss takes place due to a handover of the terminal unit 201, the video data of during handover, etc, is stored in the video server 203. When an association is established between a new access point and a wireless channel, the video data of during handover stored in the video server 203 and the like is sent to the terminal unit 201. Accordingly, the terminal unit 105 even if suspended in video image due to a handover, can resume the reproduction starting at a video image of upon suspension.

### [Fifth Embodiment]

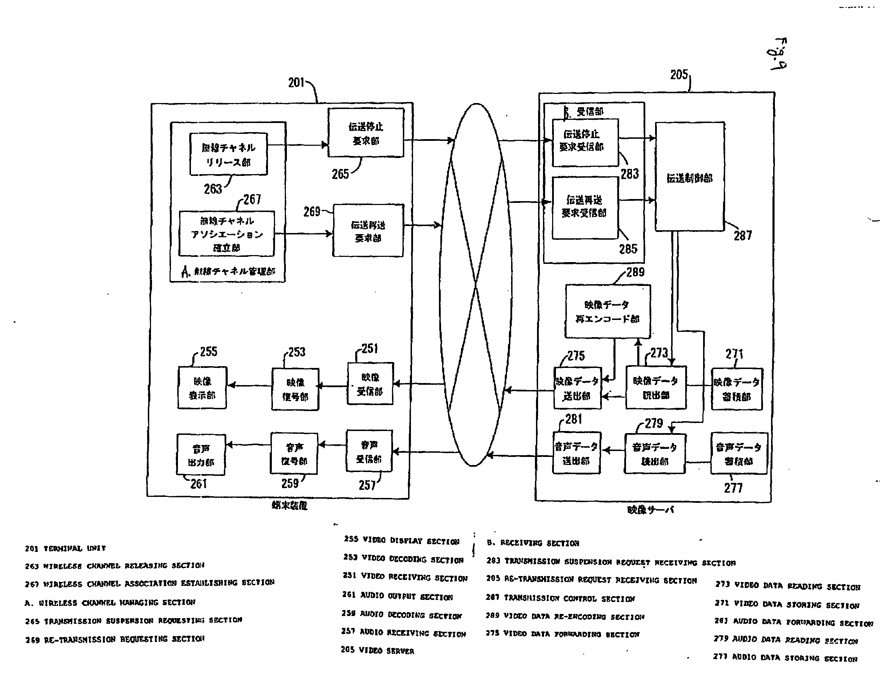

The arrangement of a video transmission system having the constituent element of a server apparatus and terminal unit according to a fifth embodiment is similar to that of the fourth embodiment, hence being omitted of explanation. However, a video server 205 as a server apparatus used in this embodiment is configured having a video data re-encoding section 289 in addition to the constituent elements possessed by the video server 203 of the fourth embodiment, as shown in Fig. 9. The video data re-encoding section 289 is to re-encode the video data read out of the video data storing section 107 when handover is over and video data is again forwarded from the video server 205. Particularly, encoding is made such that the video data in the first frame turns into an intra-frame coded image (I picture).

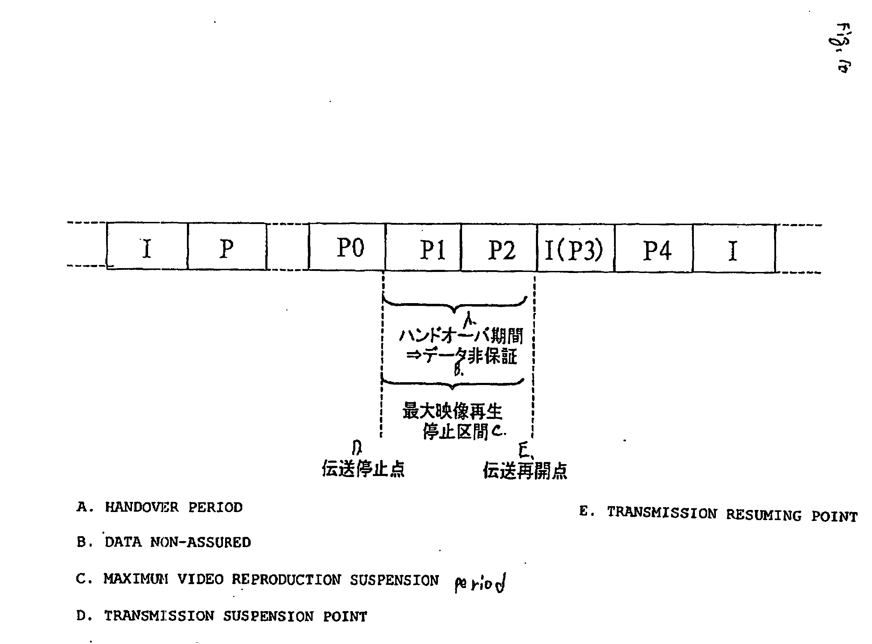

Accordingly, in case encoded and forwarded such that the packet of the video data stored in the video data storing section 107 begins at an intra-frame coded image (I picture) as shown in Fig. 10, the terminal unit 201 satisfactorily decode it as it is, thus normally reproducing the image after ending the handover.

### [Sixth Embodiment]

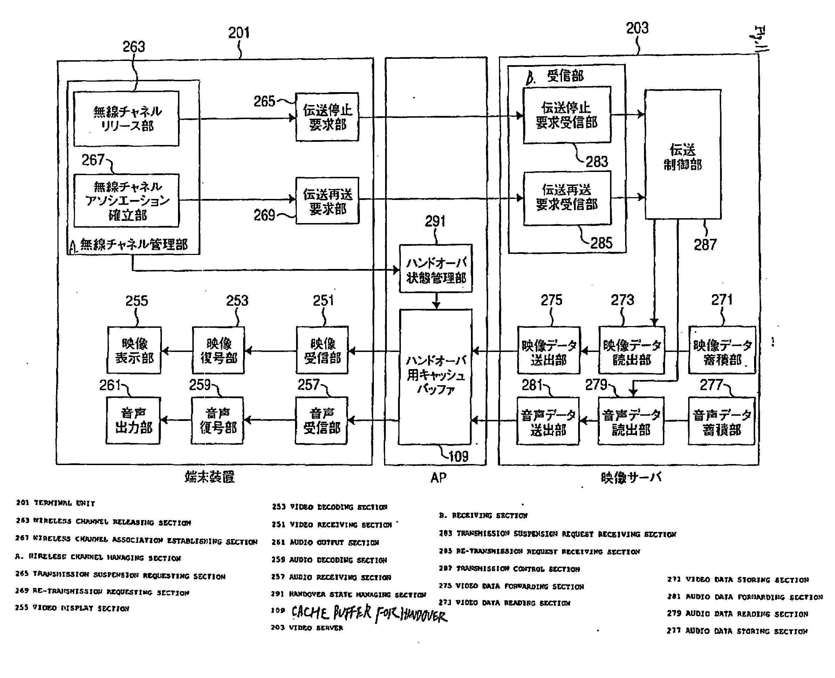

The arrangement of a video transmission system in a sixth embodiment is similar to that of the fourth embodiment, hence being omitted of explanation. However, the access point AP to be used in this embodiment is configured having a cache buffer for handover109 and handover-state managing section 291 possessed by the access point of the second embodiment, as shown in Fig. 11.

The cache buffer for handover 109 is to previously buffer the video data, etc. to be sent to the terminal unit 201, as was explained in the second embodiment. Meanwhile, the handover-status managing section 291 is to control the release or establishing an association of wireless channel by the wireless-channel managing section (wireless-channel releasing section 263 and wireless-channel association establishing section 267) of the terminal unit 201. It controls to buffer the image data onto the cache buffer for handover 109, depending upon a state thereof.

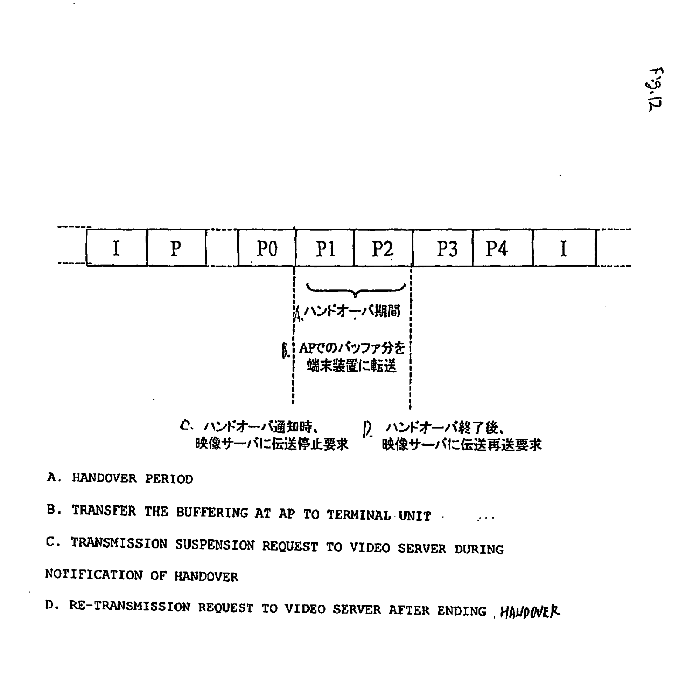

Accordingly, as shown in Fig. 12, the video data, etc. during a handover period is stored to the cache buffer for handover109 of the access point. The video data, etc. is forwarded to the terminal unit 201 in time with a handover start and end. The terminal unit 201, even if video image is suspended by a handover, can resume the reproduction starting at a video image of upon suspension.

### [Seventh Embodiment]

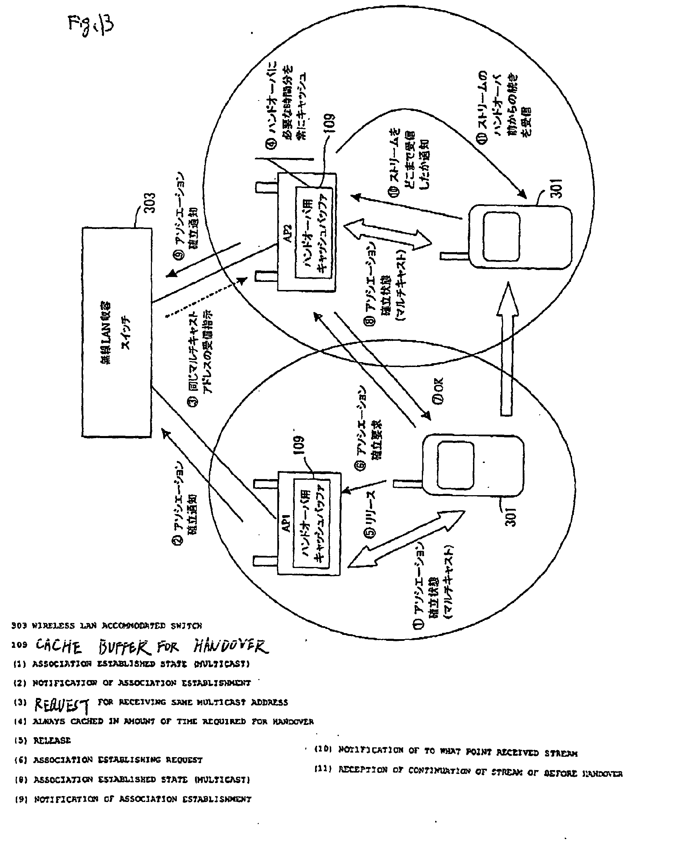

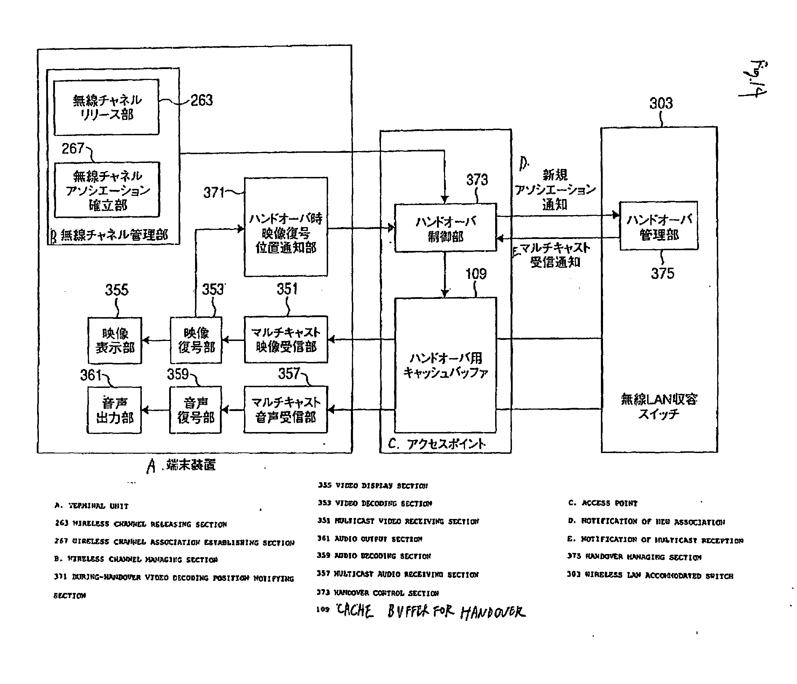

Fig. 13 is an explanatory figure showing the arrangement and operation of a video transmission system according to a seventh embodiment of the invention. As shown in the figure, the arrangement of the video transmission system in the seventh embodiment is nearly similar to that of the second embodiment. However, the terminal unit 301, the access point AP and the wireless LAN accommodated switch of this embodiment are different in internal configuration. Fig. 14 shows an internal configuration of the terminal unit 301, access point AP and wireless-LAN accommodated switch 303 of this embodiment.

As shown in the figure, the terminal unit 301 of this embodiment is configured having a wireless-channel managing section formed by a wireless-channel releasing section 263 and wireless-channel association establishing section 267 explained also in the fourth embodiment, and a video-decoding position notifying section 371, besides a multicast video receiving section 351, a video decoding section 353, a video display section 355, a multicast voice receiving section 357, a voice decoding section 359 and a voice output section 361. The video-decoding-position notifying section 371 is to notify a video decoding position to the access point AP during handover.

Meanwhile, the access point AP of this embodiment has a handover control section 373 besides a cache buffer for handover109 explained in the second embodiment. In this embodiment, the cache buffer for handover109 is to buffer the multicast video data, etc. sent from the wireless LAN accommodated switch 303. Incidentally, the multicast video data, etc. stored in the cache buffer for handover 109 is received at a multicast video receiving section 351 or multicast voice receiving section 357 of the terminal unit 301. Meanwhile, the handover control section 373 is to notify the wireless LAN accommodated switch 303 of a new association establishment and control the cache buffer for handover109, on the basis of an association establishment or release of a wireless channel instructed from the wireless-channel managing section of the terminal unit 301.

Meanwhile, the wireless LAN accommodated switch 303 of this embodiment has a handover managing section 375. In response to a new association establishment notification sent from the handover control section 373 of an access point, the handover managing section 375 instructs the relevant access point to receive a multicast.

In the video transmission system of this embodiment having the constituent elements explained above, explanation is made on the operation that the access point to establish association moves from AP1 to AP2 due to a movement of the terminal unit 301, as a video-suspension restoring method in a seventh embodiment, with reference to Fig. 13.

At first, (1) when the terminal unit 301 establishes an association of wireless channel with the AP1 by multicast, (2) the AP1 notifies the wireless LAN accommodated switch 303 of a fact of established an association with the terminal unit 301. Then, (3) the wireless LAN accommodated switch 303 instructs the access point AP2 in a cell adjacent to the AP1 to receive the same multicast address. (4) the AP2 always caches to a cache buffer for handover the video data in an amount required for handover.

In such a state, (5) the terminal unit 301 releases the wireless channel on which an association is established. When the wireless channel is released, the terminal unit 301 established an association with the AP1 has been supplied with the ID of AP2 from the AP2. Accordingly, the terminal unit 301, after releasing the wireless channel with the AP1, (6) requests the AP2 to establish an association of wireless channel. (7) When the AP2 sends a response of establishment OK back to the terminal unit 301 in accordance with this request, (8) the terminal unit 301 establishes an association of wireless channel with the AP2.

In case the terminal unit 301 establishes an association of wireless channel with the AP2, (9) the AP2 notifies the wireless LAN accommodated switch 303 of a fact of established an association with the terminal unit 301. Next, (10) the terminal unit 301 notifies the AP2 of to what point a stream (video data) has been received before the handover, (11) to receive the continuation of video data of at and before the handover of the stream. The terminal unit 301, after reproducing the continuation of received video data, reproduces the video data of after the handover sent from the AP2.

As explained above, in the video transmission system and video-suspension restoring method of this embodiment, there is no occurrence of data transfer between access points as in the second embodiment, and furthermore there is no need to adjust the chronological relationship of packets at the terminal unit 301 after ending the handover. Accordingly, even if the video image is suspended due to a handover, the video image can be swiftly resumed at a time point of suspension.

### [Eighth Embodiment]

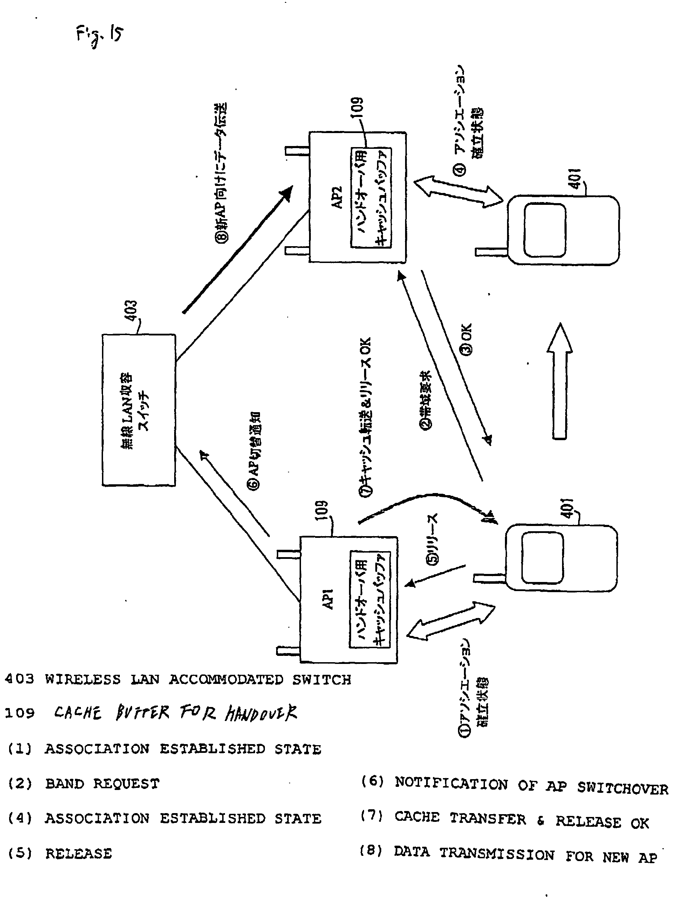

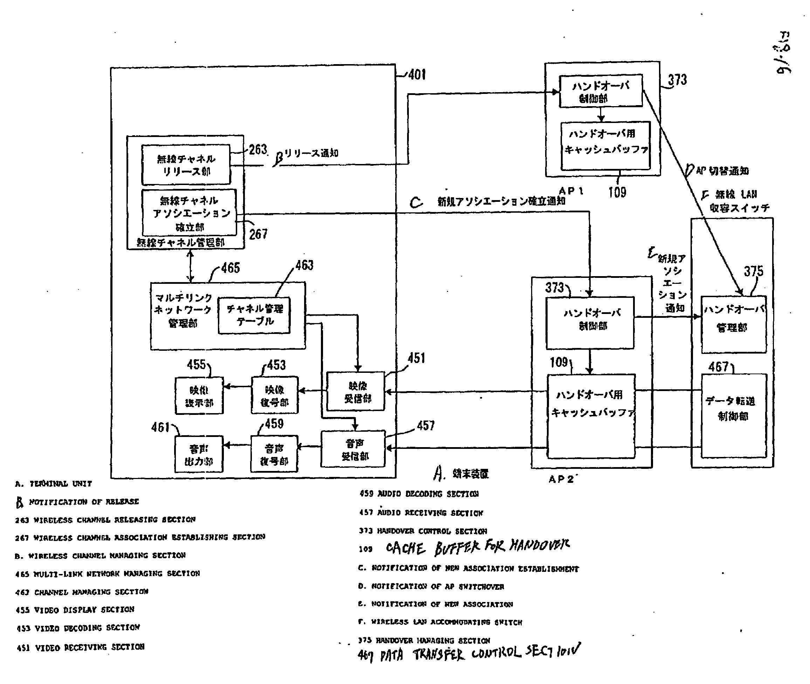

Fig. 15 is an explanatory figure showing the arrangement and operation of a video transmission system according to an eighth embodiment of the invention. As shown in the figure, the arrangement of the video transmission system in the eighth embodiment is nearly similar to that of the second embodiment. However, the terminal unit 401, the access point AP and the wireless LAN accommodated switch 403 of this embodiment are different in internal configuration. Fig. 16 shows an internal configuration of the terminal unit 401, access point AP and wireless-LAN accommodated switch 403 of this embodiment.

As shown in the figure, the terminal unit 401 of this embodiment is a terminal mounting a multi-receiving module, which is configured having a wireless-channel managing section formed by a wireless-channel releasing section 263 and a wireless-channel association establishing section 267 explained in the fourth embodiment, and a multi-link network managing section 465 having a channel managing table 463, besides a multicast video receiving section 451, a video decoding section 453, a video display section 455, an audio receiving section 457, an audio decoding section 459 and an audio output section 461.

The channel managing table 463 has, as its elements, a use application ID, a socket descriptor, a service class, a secured band, a wireless-channel status and wireless-channel ID, and recorded in rewritable recoding means. Meanwhile, the multi-network managing section 465 looks up the channel managing table 463, to manage the switchover of two wireless channels for one IF connection.

Meanwhile, the access point AP of this embodiment has a handover control section 373 as explained in the seventh embodiment, besides a cache buffer for handover 109 as explained in the second embodiment. Meanwhile, the wireless LAN accommodated switch 403 is configured having a data transfer control section 467 for control of transferring the video data, etc. to be forwarded to the access point, besides a handover managing section 375 as explained in the seventh embodiment.

Incidentally, the handover control section 373 of the access point AP, when receiving a release notification from the wireless-channel releasing section 263 of the terminal unit 401, sends an access-point switchover notification (AP switchover notification) to the handover managing section 375 of the wireless LAN accommodated switch 403. When a new association notification is received from the wireless-channel association establishing section 267 of the terminal unit 401, this is transferred to the handover managing section 375 of the wireless LAN accommodated switch 403.

In the video transmission system having the above explained constituent elements, explanation is made on the operation that the access point to establish association moves from AP1 to AP2 due to a movement of the terminal unit 401, as a video-suspension restoring method in an eighth embodiment, with reference to Fig. 15.

At first, (1) in a state that a multicast association is established of the terminal unit 401 with the AP1, (2) the terminal unit 401 requests the AP2 to utilize a wireless channel different in band (request for band). (3) When the AP2 sends a response of utilization OK back to the terminal unit 401 in response to the request, an association of wireless channel is established between the terminal unit 401 and the AP2. The terminal unit 401, after established an association with the AP2, (5) releases the wireless channel on which an association is established with the AP. In case the relevant release is done for the AP1, (6) a notification of AP switchover is made to the wireless LAN accommodated switch 403. (7) The AP1 transfers the video data, etc. buffered in the cache buffer for handover 109 to the AP2. The wireless-LAN accommodated switch 403, when receiving an AP switchover notification, forwards video data, etc. to the AP2 already established an association with the terminal unit 401. The relevant video data is to be transferred to the terminal unit 401 through the AP2.

As explained above, in the video transmission system and video-suspension restoring method of this embodiment, because the terminal unit 401 has a multi-link network managing section 465, it can manage one IP connection by switching over two wireless channels. In the stage prior to releasing the access point (AP1) established an association and the wireless channel, an association of wireless channel is established with a new access point (AP2). After establishing the association, release is possible for the wireless channel to the access point (AP1) being utilized. Accordingly, no packet loss occurs. The terminal unit 401 can continue reproduction without encountering a suspension of video image due to a handover.

Although the present invention was explained in detail and with reference to the particular embodiments, it is apparent for the ordinary skilled person that various changes and modifications are possible without departing from the spirit and scope of the invention.

This application is based on Japanese Patent Application (Patent Application 2001-339475) filed on November 5, 2001, the content of which is hereby incorporated by reference.

### <INDUSTRIAL APPLICABILITY>

As explained in the above, according to the video transmission system and video-suspension restoring method of the present invention, the terminal unit, even when the video image is suspended by a handover, can resume the reproduction at a video image of upon suspension.

## Claims

1. A server apparatus for sending video data on a packet-by-packet basis, in a video transmission system for sending video data to a terminal unit through an access point, the server apparatus comprising:
a transmitting section for sending video data on a packet-by-packet basis;
a video data storing section for storing video data; and
a receiving section for receiving a request from the terminal unit;
wherein the video storing section, when the terminal unit received video data sent from an access point established an association and displayed a video image releases a wireless channel to an access point on which an association is established, stores post-release video data;
the receiving section, when the terminal unit establishes an association of wireless channel to another access point, receiving a request to retransmission the stored post-release video data from the terminal unit.

2. A server apparatus according to claim 1, wherein the server apparatus further comprises
a transmission control section for control to send video data,
the receiving section receiving a transmission-suspension request from a transmission-suspension requesting section the terminal unit possesses and a retransmission request from a retransmission requesting section,
the transmission control section controlling to send video data or stored video data, on the basis of the transmission suspension request and the retransmission request.

3. A server apparatus according to claim 1, wherein the server apparatus further comprises
a video data re-encoding section for re-encoding video data,
the receiving section receiving a retransmission request from a retransmission requesting section the terminal unit possesses,
the video data re-encoding section re-encoding the stored video data such that, of stored vided data to send according to the retransmission request, one or more frames becomes an intra-frame encoded image.

4. A server apparatus according to claim 1, wherein the transmitting section sends video data by multicast to an access point for sending video data to the terminal unit established an association and a plurality of access points adjacent to the access point.

5. A terminal unit for receiving video data sent from an access point established an association and displaying a video image, in a video transmission system for sending video data to the terminal unit through the access point, the terminal unit comprising:
a video receiving section for receiving video data sent on a packet-by-packet basis;
a video display section for displaying a video image on a basis of the video data;
a transmission-suspension requesting section for sending a transmission-suspension request for suspending to send and storing video data, to a server apparatus for sending video data on a packet-by-packet basis; and
a retransmission requesting section for sending a request to resend video data, to the server apparatus;
wherein the transmission-suspension requesting section, when a wireless channel to an access point established an association is released, forwards a transmission-suspension request of the post-release video data to the server apparatus;
the retransmission requesting section, when established an association of wireless channel to another access point, forwarding a request to resend the stored post-release video data to the server apparatus.

6. A terminal unit according to claim 5, wherein the terminal unit further comprising
a video data receiving status monitoring section for monitoring a receiving status of video data to send from the access point,
an association establishment detecting section for detecting an association establishment of a wireless channel to another access point by the terminal unit, on the basis of a receiving status of video data being monitored by the video data receiving status monitoring section, and
a retransmission-request transmitting section for sending a request to resend the post-release video data stored in the server apparatus when the association establishment detecting section detects an association establishment of a wireless channel to the other access point.

7. A terminal unit according to claim 5, wherein the terminal unit further comprising
a transmission-suspension requesting section for requesting the server apparatus to suspend video data from sending, immediately before releasing the wireless channel to the access point established an association, and
a retransmission requesting section for requesting the server apparatus to resend video data when an association of wireless channel is established to an access point.

8. A terminal unit according to claim 7, wherein the retransmission requesting section
releases the wireless channel to the access point established an association, notifies, after established an association of wireless channel to adjacent another access point, the other access point of to what point received video data from the access point, and forwards a request to send a continuation of video data from the other access point.

9. A terminal unit according to claim 5, wherein the terminal unit further comprises
a multi-link network managing section for managing to switch over two wireless channels for one IP connection,
the multi-link network managing section
managing to switch over the wireless channels in the terminal unit such that, in a state the terminal unit is established with an association an access point, an association of wireless channel is established to another access point and the wireless channel is released from the access point.
